# DEMANDE DE BREVET EUROPEEN

(11) **EP 0 683 495 A1**
(43) Date de publication de la demande: **22.11.1995**
(21) Numéro de dépôt: 95401042.7
(22) Date de dépôt: 04.05.1995
(51) Int. Cl.: H01B 7/18, H02G 1/08, E21B 19/22, B65H 51/14, G02B 6/44

(54) **Dispositif pour pousser un câble de télécommunications dans une conduite**

(30) Priorité: 06.05.1994 FR 9405636
(71) Demandeur: FRANCE TELECOM, F-75015 Paris (FR)
(72) Inventeur: Lesueur, Philippe, F-22730 Tregastel (FR); Crespel, Daniel, F-22300 Lannion (FR); Pecot, Alain, F-22300 Lannion (FR)
(74) Mandataire: Armengaud Ainé, Alain

(57) **Abrégé**

Ce dispositif, adapté à un câble comportant une structure interne de support d'au moins une fibre optique et une gaine de protection extérieure (1) entourant cette structure, cette gaine présentant des annelures externes (3), coaxiales et successives, modifiant périodiquement et régulièrement l'épaisseur de la gaine sur toute sa longueur, d'une annelure à la suivante, se caractérise en ce qu'il comporte des moyens propres à coopérer avec ces annelures pour réaliser le déplacement du câble dans la conduite. Ces moyens peuvent être constitués par une courroie d'entraînement (9), une vis sans fin ou un écrou en prise sur les annelures formant filetage.

## Description

La présente invention se rapporte au domaine des câbles, notamment de télécommunications, en particulier du genre comportant une et de préférence plusieurs fibres optiques s'étendant selon la longueur du câble, et concerne plus particulièrement la structure de la gaine extérieure qui entoure ce câble ainsi que le procédé de mise en place de celui-ci dans une conduite.

L'invention concerne plus particulièrement un dispositif pour pousser un tel câble à l'intérieur d'une conduite, ce dispositif s'appliquant aussi bien à des câbles dits de branchement, raccordant un réseau à une installation desservant des usagers, qu'à pour des câbles de transport ou de distribution, enterrés ou aériens. L'invention peut également s'appliquer à d'autres types de câbles, par exemple pour le transport d'énergie électrique.

On connaît déjà dans la technique de nombreuses réalisations de câbles de branchement utilisés dans les parties terminales des réseaux de distribution, en particulier les câbles à fibres optiques multimodes, adoptés dans les installations de visiocommunications, où les fibres optiques assurent la liaison jusqu'à un câble coaxial de transport.

Ces câbles ont généralement une structure tubulaire ou en U selon un plan transversal pour le montage au fond du logement ainsi ménagé d'une ou de plusieurs fibres optiques. L'ensemble est entouré par une gaine de protection, généralement en chlorure de polyvinyle, avec le cas échéant une tresse de renforcement métallique et une seconde gaine externe en polyéthylène à haute densité. En outre, ces câbles peuvent être rigidifiés selon leur axe longitudinal au moyen de fils, appelés porteurs, métalliques ou réalisés en un matériau composite, notamment à base de fibres de verre et de résine, qui s'étendent parallèlement aux fibres logées au fond de la structure en U ou du tube.

Ces câbles présentent l'inconvénient d'un poids par unité de longueur relativement important, du fait en particulier des porteurs de renforcement qu'ils incorporent. Les longueurs de ces câbles susceptibles d'être posées en conduite, d'un seul tenant, à l'aide des procédés classiques, soit de tirage au moyen d'un organe de traction fixé en bout du câble à une extrémité et enroulé par l'autre sur le touret d'un treuil ou analogue, soit de soufflage au moyen d'une pression d'air comprimé qui s'exerce sur un furet monté en tête du câble et dont le diamètre extérieur est sensiblement égal à celui de la conduite, le déplacement du câble étant réalisé sous la poussée ainsi créée sur le furet, sont dans ces conditions limitées.

D'autre part, la raideur d'un tel câble est souvent trop faible pour permettre son introduction dans la conduite par un processus d'entraînement mécanique, le câble étant pincé à l'entrée de cette conduite entre deux galets tournant en sens inverse et qui entraînent le câble entre eux au fur et à mesure leur rotation, en le poussant progressivement dans la conduite. Le cas échéant, l'effort de poussée sur le câble à l'entrée de cette dernière peut être obtenu manuellement.

Dans une version particulière, le câble tubulaire ou à structure en U avec gaine en chlorure de polyvinyle, peut être entouré de mèches "aramides", constituées d'un polyamide aromatique, polymère de l'acide téréphtalique, avec une gaine externe en polyéthylène, cette solution limitant le poids du câble en facilitant sa pose en conduite par le processus de tirage. En revanche, le coût de la fabrication d'un tel câble augmente et entrave notamment la faculté de dénuder localement la ou les fibres optiques, par enlèvement à l'endroit correspondant des diverses gaines et du renforcement du câble.

On connaît également les câbles destinés au réseau de télécommunications à fibres optiques monomodes, dont la mise en place dans les conduites terminales d'une installation peut être réalisée conformément aux dispositions décrites dans le brevet européen EP-A-0 108 590. Ces câbles sont généralement de faible diamètre, de l'ordre de 2 à 4 mm, et sont prévus pour être également mis en place dans des conduites étroites, entre 5 et 10 mm, présentant le cas échéant une longueur qui peut atteindre 2 à 300 m.

Selon ce document, la mise en place du câble s'effectue par un soufflage dynamique d'air comprimé qui entraîne le câble par frottement sur sa surface et portage sur coussin d'air sur la longueur souhaitée. Un tel câble, dont la résistance mécanique est relativement limitée, présente l'inconvénient de ne pas pouvoir être installé autrement et en particulier de ne pas pouvoir être mis en place par tirage et/ou poussée sur le câble.

Dans ce dernier cas en effet, les galets d'entraînement exerceraient sur les câbles des efforts radiaux qui se transmettraient à travers leurs gaines aux fibres optiques internes et seraient susceptibles dès lors de provoquer des déformations locales sur les fibres, et de les détériorer, voire de les rompre. De plus, ces câbles ne permettent pas de fixer en tête de ceux-ci un moyen d'accrochage convenable pour effectuer leur tirage, les efforts de traction qui seraient développés risquant en outre d'être également transmis aux fibres qui ne peuvent les supporter.

Dès lors, si l'on souhaite revenir aux techniques de tirage et/ou de poussage du câble, même lorsque celui-ci est destiné à un réseau à fibres optiques monomodes, il convient de renforcer ce dernier, ce qui renvoie aux inconvénients déjà mentionnés, même avec les techniques les plus récentes où ces câbles comportent des gaines lisses et des entraîneurs intermédiaires, les gaines étant lubrifiées pour faciliter leur avancement dans la conduite ; en revanche, ces lubrifiants peuvent nuire à la coopération des entraîneurs et de la gaine qu'ils serrent et déplacent dans leur mouvement, en les faisant le cas échéant patiner l'un par rapport à l'autre.

La présente invention se rapporte à un dispositif pour pousser dans une conduite un câble de télécommunications du genre précité, notamment à fibres optiques, pour branchements, transport ou distribution, comportant une structure interne de support d'au moins une fibre optique et une gaine de protection extérieure entourant cette structure, réalisée en une matériau thermoplastique ou thermodurcissable, cette gaine étant d'une part renforcée par des éléments d'armature, constitués de torons en acier, de mèches d'aramides, de polyamides, de polyesters, de fibres synthétiques, ou de fibres de verre ou de carbone, liées ou non par une résine thermodurcissable ou thermoplastique, noyés dans l'épaisseur de la gaine et s'étendant parallèlement à l'axe longitudinal du câble ou s'enroulant en hélice autour de cet axe, et présentant d'autre part des annelures externes, coaxiales et successives, modifiant périodiquement et régulièrement l'épaisseur de cette gaine sur toute sa longueur d'une annelure à la suivante, le profil de ces annelures présentant selon un plan contenant l'axe la forme d'un trapèze, d'un triangle ou d'une fraction de sinusoïde.

Dans un câble de ce genre, la gaine externe est ainsi conçue de manière à éviter les inconvénients des solutions classiques, en permettant d'appliquer aux câbles considérés n'importe quelle méthode de pose, par tirage, poussage ou soufflage, ou encore selon toute combinaison de ces procédés, en améliorant le résultat obtenu, notamment en assurant la mise en place de plus grandes longueurs grâce en particulier à une diminution de la surface de frottement.

La présence de telles annelures dans la gaine externe du câble présente de nombreux avantages.

En premier lieu, ces annelures diminuent la surface de contact entre la paroi interne de la conduite dans laquelle le câble est mis en place et celui-ci, en réduisant les phénomènes d'adhésions localisées qui provoquent des points de résistance à son avancement.

En second lieu, la géométrie extérieure de la gaine permet de faciliter l'ancrage ou l'immobilisation en tête du câble, le cas échéant en tout autre endroit selon la longueur de celui-ci, soit d'un organe d'immobilisation auquel est fixé un filin de traction qui permet de tirer le câble depuis l'extrémité opposée de la conduite à partir d'un treuil ou autre, soit d'un ou de plusieurs furets ou analogues, sur lesquels peut s'exercer une poussée d'air comprimé afin de permettre l'entraînement du câble dans la conduite selon le procédé de soufflage classique. Notamment, l'organe d'immobilisation ou le furet selon le cas, peuvent être fixés au niveau de la zone qui sépare deux annelures successives, permettant de les bloquer en position et d'éviter qu'ils ne glissent sur la surface externe de la gaine et ne se séparent de celle-ci, sous l'effet de la traction ou de la poussée correspondante.

Dans tous les cas, la raideur globale du câble peut être modulée en fonction des caractéristiques de la conduite, notamment selon la longueur de celle-ci et son profil, en particulier qu'elle comporte ou non des coudes ou changements de direction, au droit desquels, les efforts exercés sur le câble doivent être suffisants pour permettre de franchir ces discontinuités et vaincre les effets de frottement qui en résultent, en restant toujours en deçà des contraintes maximales créées sur la ou les fibres à l'intérieur de la gaine.

Les torons, mèches, nappes, tissus, filaments ou fibres utilisés permettent en toutes circonstances de jouer sur la raideur du câble et en particulier d'adapter celui-ci de façon optimale aux efforts de poussée ou de traction, en limitant notamment le flambage du câble, tout en autorisant un passage sûr et efficace dans les coudes.

Avec une gaine annelée de ce type, le pelage localisé de la gaine, pour accéder à la fibre optique du câble, peut être également réalisé plus facilement, en particulier entre deux annelures successives où l'épaisseur de la gaine est plus faible, cette région pouvant en outre servir au marquage du câble en un endroit où ne se produit aucun frottement contre la conduite et qui n'est ainsi soumis à aucune usure, de telle sorte que l'identification du câble en est facilitée. Ce marquage, convenablement répété selon la longueur du câble, permet le cas échéant de contrôler immédiatement la dimension de celui-ci introduite dans la conduite, indépendamment du procédé mis en oeuvre pour réaliser son déplacement.

Mais de façon principale, l'avantage d'une gaine annelée du genre précité est de permettre d'assurer sa mise en place à l'intérieur de la conduite par un processus de poussée mécanique, mis en oeuvre séparément ou en combinaison avec un soufflage ou une traction mécanique sur ce câble conformément aux procédés classiques, évitant l'inconvénient de ces méthodes traditionnelles où le câble, comportant une gaine lisse, est pincé plus ou moins fortement à l'entrée dans la conduite entre deux galets qui l'écrasent au moins partiellement.

Ainsi, lorsque les annelures de la gaine se disposent selon la direction de l'axe longitudinal du câble en étant parallèles entre elles dans des plans voisins perpendiculaires à cet axe, le câble, dont la résistance à l'écrasement est très sensiblement accrue par rapport à celle d'un câble traditionnel pour un volume de matière équivalent, peut être facilement poussé dans la conduite au moyen d'un dispositif selon l'invention qui, dans un mode de réalisation particulier, peut comporter au moins une courroie crantée, apte à coopérer avec au moins une annelure de la gaine, cette courroie, en forme de bande sans fin, étant associée à un mécanisme d'entraînement comprenant des poulies sur lesquelles la bande est tendue, l'une au moins de ces poulies étant motrice.

En variante, avec la même configuration de la gaine que dans le mode de réalisation ci-dessus, le dispositif peut comporter une vis tangente dont le filet coopère avec les annelures de la gaine à la façon d'un engrenage à vis sans fin.

Dans un autre mode de réalisation, lorsque les annelures de la gaine s'enroulent hélicoïdalement selon la direction de l'axe longitudinal du câble, le dispositif consiste de préférence dans ce cas en un écrou ou similaire, apte à être entraîné autour de l'axe du câble, cet écrou comportant un filetage interne hélicoïdal en prise avec les annelures, de telle sorte que cet écrou, entraîné en rotation mais immobilisé en translation, provoque simultanément le déplacement axial de la gaine par réaction du filetage sur les annelures.

Dans tous les cas, les dispositifs d'entraînement peuvent être adaptés de manière à fournir sur le câble la tension juste maximale autorisée, pour laquelle les risques de contraintes excessives sur la ou les fibres optiques contenues dans la gaine seront maintenus à un niveau acceptable, que le câble soit tiré, poussé ou soufflé dans la conduite. Notamment, la structure de la gaine permet, non seulement d'utiliser un lubrifiant facilitant le déplacement du câble dans la conduite, mais de conserver localement ce lubrifiant sur toute la longueur du câble, entre les annelures successives, ce qui accroît considérablement l'efficacité du processus de mise en place.

D'autres caractéristiques d'un câble selon l'invention et des moyens permettant de réaliser son déplacement à l'intérieur d'une conduite, apparaîtront encore à travers la description qui suit de plusieurs exemples de réalisation, donnés à titre indicatif et non limitatif, en référence aux dessins annexés sur lesquels :
- La Figure 1 est une vue en perspective d'une gaine de câble de télécommunications, conforme à l'invention.
- La Figure 2 est une vue en coupe longitudinale d'une fraction de la gaine illustrée sur la Figure 1.
- La Figure 3 est une vue schématique en coupe d'un dispositif d'entraînement d'un câble muni d'une gaine selon les Figures 1 et 2.
- La Figure 4 illustre schématiquement une variante de la gaine, comportant des annelures droites dans des plans perpendiculaires à l'axe de la gaine, et du dispositif d'entraînement de celle-ci.
- La Figure 5 représente, en coupe transversale et en perspective partielle, le dispositif d'entraînement de la gaine selon la Figure 4.
- La Figure 6 représente schématiquement un autre mode de réalisation du dispositif d'entraînement, adapté à une variante de réalisation de la gaine du câble comportant des annelures hélicoïdales.
- La Figure 7 illustre, à plus grande échelle, un élément d'ancrage apte à être fixé en bout de la gaine annelée selon l'invention, pour réaliser le tirage de celle-ci.
- La Figure 8 est une vue en coupe transversale de la Figure 7, avec le câble monté à l'intérieur d'une conduite.
- La Figure 9 illustre une variante de la Figure 7, où le dispositif d'ancrage est constitué par un furet de traction, permettant une mise en place du câble dans la conduite par soufflage d'air comprimé.
- Les Figures 10, 11, 12, et 13 illustrent d'autres variantes du furet de traction représenté sur la Figure 9.

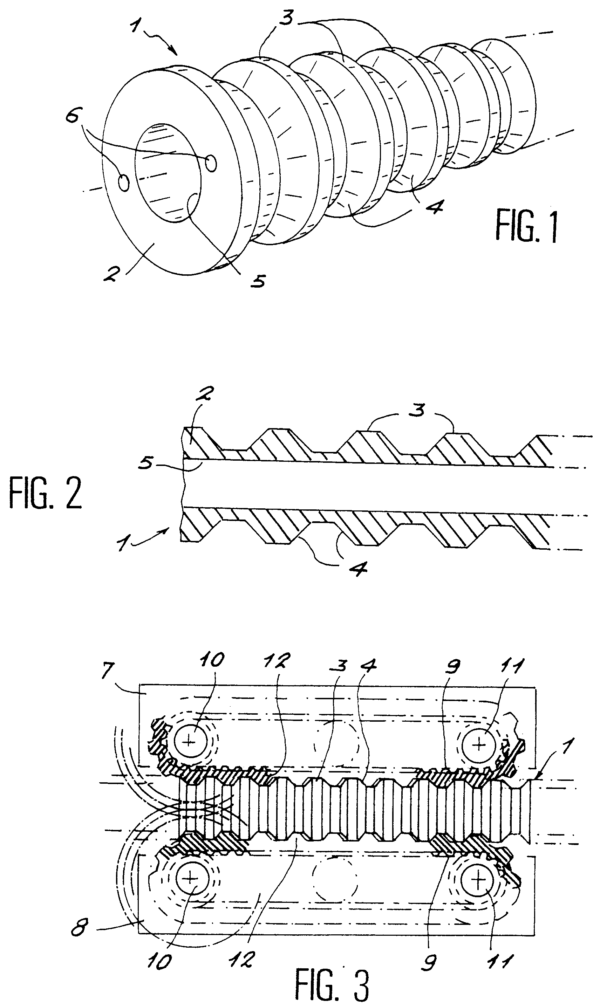

Sur la Figure 1, la référence 1 désigne une gaine de câble de télécommunications entourant sur toute sa longueur une structure interne (non représentée), contenant et immobilisant, de façon en soi connue, une ou plusieurs fibres optiques pour réseau de télécommunications monomodes ou le cas échéant multimodes.

La gaine 1 comporte une paroi 2 d'épaisseur appropriée, réalisée en un matériau thermodurcissable ou thermoplastique selon le cas, cette épaisseur étant périodiquement variable sur la longueur de la gaine en présentant des annelures successives et coaxiales 3, qui sont séparées de l'une à l'autre par des creux 4.

De préférence et comme illustré sur le mode de réalisation de la Figure 2, les annelures 3 et les creux 4 qui les séparent successivement, sont tels que chaque annelure, et également chaque creux voisin, présente un profil sensiblement en forme de trapèze.

La gaine 1 comporte un alésage central et longitudinal 5 recevant la structure de support des fibres optiques. En outre, la gaine peut être avantageusement raidie au moyen d'éléments de renforcement 6, constitués pàr des torons métalliques, des mèches d'un matériau plastique résistant du genre fibres d'aramide (polyamide aromatique), ou fibres synthétiques (polyester), ou encore en fibres de verre armées par une résine, voire en fibres de carbone, ces éléments étant notamment disposés longitudinalement dans l'épaisseur de la paroi 2 de la gaine 1, parallèlement à l'axe général du câble.

Bien entendu, d'autres dispositions sont possibles, les éléments de renforcement 6 pouvant en particulier être enroulés hélicoïdalement autour de l'axe de la gaine du câble.

Dans l'exemple illustré sur la Figure 2, la gaine représentée comporte deux éléments de renforcement 6, disposés symétriquement de part et d'autre de l'axe du câble, toute autre configuration pouvant être envisagée selon le cas, pour autant que le nombre de ces éléments ne pénalise pas trop fortement le poids du câble, et lui apporte une raideur acceptable en même temps qu'une résistance à la traction ou au flambage suffisante pour résister aux efforts de traction ou de poussée exercés sur ce câble pour sa mise en place dans une conduite.

Sur la Figure 3, a été schématiquement représenté un dispositif permettant selon l'invention d'assurer la poussée du câble muni d'une gaine externe 1 du genre décrit ci-dessus.

Ce dispositif comporte, à l'intérieur d'un boîtier en deux parties, respectivement 7 et 8, disposées de part et d'autre de l'axe du câble, chacune de ces parties comprenant une courroie d'entraînement 9, se présentant sous la forme d'une bande sans fin tendue sur deux poulies, respectivement 10 et 11, dont l'une au moins est motrice dans le sens du déplacement souhaité pour la gaine du câble, l'autre bande étant libre. En variante, les deux bandes peuvent être entraînées simultanément.

Les courroies 9 comportent des saillies 12, dont le profil est choisi de telle sorte qu'il corresponde sensiblement à celui des creux 4 prévus entre les annelures 3 de la gaine 1, de manière à venir coopérer avec ceux-ci sur une longueur suffisante de la gaine entre les poulies 10 et 11, en exerçant sur la gaine un effort de poussée approprié, égal à lui-même pour une vitesse d'entraînement donnée des courroies 9, ces dernières étant identiques et commandées en synchronisme.

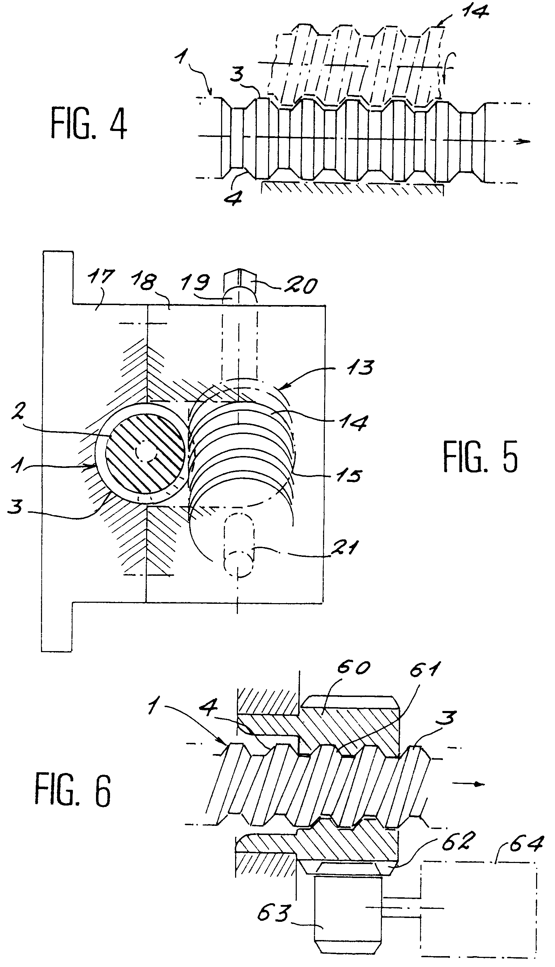

Dans une variante de réalisation illustrée sur les Figures 4 et 5, la gaine 1, avec ses annelures 3 et ses creux 4 séparant ces dernières, s'étendant dans des plans voisins et parallèles, perpendiculaires à la direction de l'axe longitudinal de la gaine, l'entraînement de celle-ci pour sa mise en place dans une conduite, est réalisé au moyen d'une vis sans fin 13 dont les filets 14 présentent un profil trapézoïdal 15, leur permettant de s'engager étroitement dans les creux 4 de la gaine entre les annelures 3, en réalisant, à la manière d'un engrenage à vis tangente, l'effort de poussée souhaité.

La Figure 5 illustre de façon plus détaillée le dispositif mis en oeuvre dans cette seconde variante, la gaine 1 avec sa paroi 2 comportant des annelures 3 perpendiculaires à son axe, coopérant avec les filets 14 à profil trapézoïdal 15 de la vis sans fin d'entraînement 13. L'ensemble est logé dans un boîtier en deux parties 17 et 18, l'axe 19 de la vis 13 comportant à une extrémité un carré 20 permettant sa liaison avec un mécanisme de commande (non représenté), l'autre extrémité 21 tourillonnant librement dans un palier du boîtier.

La Figure 6 illustre une autre variante où la gaine présente des annelures 3 qui sont hélicoïdales et adaptées à coopérer avec un écrou externe 60 en prise sur ces annelures et qui comporte un filetage hélicoïdal interne 61. Cet écrou présente une denture externe 62 engrenant avec une denture homologue d'un pignon de commande 63, lui-même entraîné par un motoréducteur 64, la rotation de l'écrou 60, libre en rotation mais immobilisé en translation, provoquant simultanément le déplacement axial de la gaine.

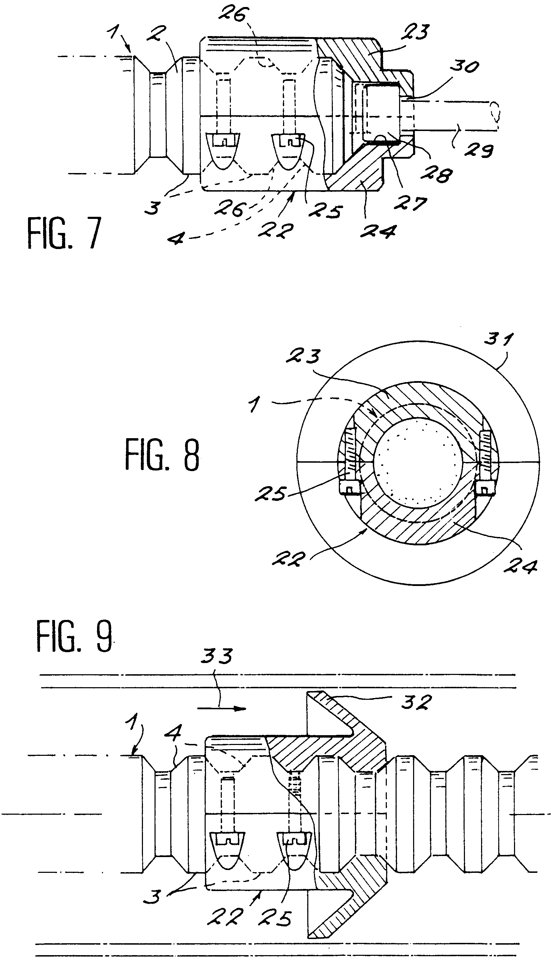

Quelle que soit la variante utilisée, la gaine 1 du câble peut être convenablement poussée dans sa conduite, grâce à l'effet des dispositifs d'entraînement représentés schématiquement sur les Figures 3, 5 et 6, ceux-ci n'étant donnés qu'à titre d'illustration, sans exclure toute autre variante mécaniquement équivalente. Toutefois, cet effort de poussée peut aussi bien être combiné avec un effort de traction complémentaire, qu'être supprimé si ce dernier se révèle suffisant. Dans ce but, la tête de la gaine 1 est associée à un organe d'ancrage et de traction 22, représenté selon divers modes de réalisation sur les Figures 7 à 13.

Dans les exemples des Figures 7 à 9, cet organe se compose avantageusement de deux parties 23, 24, de forme hémicylindrique et entourant la gaine 1 par l'extérieur, ces deux parties étant solidarisées mutuellement par des vis de blocage 25.

Intérieurement, chaque partie 23, 24 comporte des nervures circulaires 26 en saillie, dont le profil correspond sensiblement à celui des creux 4 prévus entre les annelures 3 de la gaine, de manière à permettre d'immobiliser l'organe 22 sur celle-ci, une fois les vis 25 convenablement serrées. L'organe 22 ménage en avant de la tête du câble un chambrage 27 dans lequel est immobilisé un embout 28 prévu à l'extrémité d'un filin de traction 29, passant à travers l'organe d'ancrage 22 dans un alésage 30 de celui-ci, ce filin permettant ainsi d'exercer sur le câble un effort de traction approprié pour l'entraîner dans la conduite 31 (Figure 8).

Dans la variante illustrée sur la Figure 9, l'organe d'ancrage 22 est aménagé de manière à constituer sur la tête de la gaine 1 un furet de poussée 32 sur lequel s'applique une pression d'air comprimé introduit dans la conduite 31 afin de souffler le câble dans celle-ci dans la direction schématisée par la flèche 33, selon un processus en lui-même classique. Dans cette variante, le bord extérieur 34 du furet 32 est disposé au plus près de la surface interne de la conduite 31 pour réaliser au droit de celle-ci une étanchéité suffisante.

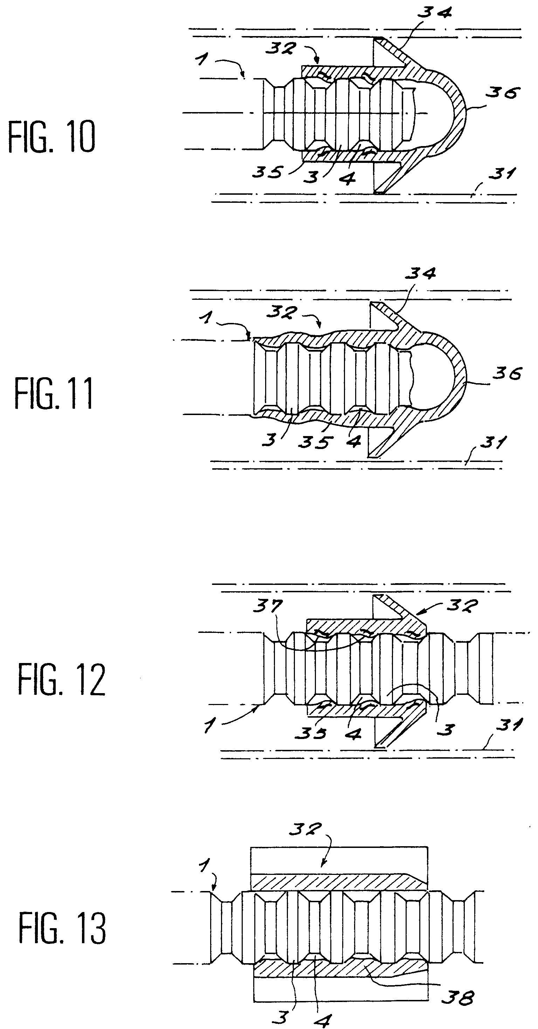

Dans une autre variante représentée sur la Figure 10, l'organe d'ancrage est à nouveau constitué par un furet 32 comportant, outre un bord extérieur 34 s'étendant obliquement au voisinage de la surface interne de la conduite 31, un corps 35 et une partie antérieure 36 formant capot venant protéger l'extrémité de la gaine du câble. Dans ce cas, le furet 32 est de préférence réalisé en un matériau présentant une certaine élasticité, de manière à pouvoir s'écarter pour sa mise en place sur la gaine 1 en bout de celle-ci, avant de se rétracter légèrement en venant emprisonner les annelures 3 correspondantes par engagement partiel dans les creux 4 qui séparent ces dernières.

Dans un autre exemple illustré sur la Figure 11, le furet 32 est réalisé en un matériau tel que le corps 35 de celui-ci soit thermorétractable pour mieux s'adapter encore sur les annelures.

Dans la variante selon la Figure 12, le corps 35 du furet 32 peut comporter des clips 37 d'accrochage dans les creux 4 entre les annelures 3.

Enfin, dans la variante selon la Figure 13, le furet 32 se présente sous la forme d'un élément de tube 38 en un matériau élastomère, de préférence fendu dans le sens de sa longueur et monté autour de la gaine 1, préalablement à une action de compression exercée sur cet élément pour forcer le matériau qui le constitue dans les creux 4, entre les annelures 3.

On réalise ainsi un câble de télécommunications qui permet d'assurer une mise en place simple et efficace de celui-ci dans une conduite de grande longueur, au moyen du dispositif de l'invention, selon la variante de celui-ci adaptée à la configuration du câble et en particulier des annelures de sa gaine.

Cette gaine peut être aisément réalisée par tout processus de moulage, ou mieux encore, de moulage-extrusion, le matériau de la gaine étant adapté à ces conditions d'emploi. De préférence, la gaine est réalisée en chlorure de polyvinyle ou en polyéthylène, ou encore en tout autre matériau plastique similaire, choisi pour ses qualités de résistance mécanique et de protection des fibres optiques du câble vis-à-vis de l'environnement.

Bien entendu, il va de soi que l'invention ne se limite pas aux exemples plus spécialement décrits et représentés en référence aux dessins annexés ; elle en embrasse au contraire toutes les variantes. En particulier, si ces exemples ont envisagé que les annelures de la gaine présentent un profil en coupe de forme trapézoïdale, il doit être entendu que de nombreuses autres sections peuvent être prévues, le profil pouvant correspondre notamment à un triangel ou à une fraction de sinusoïde ou autre.

## Revendications

**1 -** Dispositif pour pousser à l'intérieur d'une conduite un câble de télécommunications, notamment à fibres optiques, pour branchements, transport ou distribution, comportant une structure interne de support d'au moins une fibre optique et une gaine de protection extérieure (1) entourant cette structure, réalisée en une matériau thermoplastique ou thermodurcissable, cette gaine étant d'une part renforcée par des éléments d'armature (6), constitués de torons en acier, de mèches d'aramides, de polyamides, de polyesters, de fibres synthétiques, ou de fibres de verre ou de carbone, liées ou non par une résine thermodurcissable ou thermoplastique, noyés dans l'épaisseur de la gaine et s'étendant parallèlement à l'axe longitudinal du câble ou s'enroulant en hélice autour de cet axe, et présentant d'autre part des annelures externes (3), coaxiales et successives, modifiant périodiquement et régulièrement l'épaisseur de cette gaine sur toute sa longueur d'une annelure à la suivante, le profil de ces annelures, disposées dans des plans parallèles s'étendant perpendiculairement à cet axe, présentant selon un plan contenant l'axe la forme d'un trapèze, d'un triangle ou d'une fraction de sinusoïde, caractérisé en ce qu'il comporte au moins une courroie d'entraînement (9), comprenant des saillies (12) venant coopérer avec les creux (4) ménagés entre les annelures de la gaine (1), cette courroie étant constituée par une bande sans fin qui s'enroule sur des poulies (10, 11) dont une au moins est motrice.

**2 -** Dispositif pour pousser à l'intérieur d'une conduite un câble de télécommunications, notamment à fibres optiques, pour branchements, transport ou distribution, comportant une structure interne de support d'au moins une fibre optique et une gaine de protection extérieure (1) entourant cette structure, réalisée en une matériau thermoplastique ou thermodurcissable, cette gaine étant d'une part renforcée par des éléments d'armature (6), constitués de torons en acier, de mèches d'aramides, de polyamides, de polyesters, de fibres synthétiques, ou de fibres de verre ou de carbone, liées ou non par une résine thermodurcissable ou thermoplastique, noyés dans l'épaisseur de la gaine et s'étendant parallèlement à l'axe longitudinal du câble ou s'enroulant en hélice autour de cet axe, et présentant d'autre part des annelures externes (3), coaxiales et successives, modifiant périodiquement et régulièrement l'épaisseur de cette gaine sur toute sa longueur d'une annelure à la suivante, le profil de ces annelures, disposées dans des plans parallèles s'étendant perpendiculairement à cet axe, présentant selon un plan contenant l'axe la forme d'un trapèze, d'un triangle ou d'une fraction de sinusoïde, caractérisé en ce qu'il comporte au moins une vis sans fin d'axe parallèle à celui de la gaine (1) et coopérant avec les annelures (3).

**3 -** Dispositif pour pousser à l'intérieur d'une conduite un câble de télécommunications, notamment à fibres optiques, pour branchements, transport ou distribution, comportant une structure interne de support d'au moins une fibre optique et une gaine de protection extérieure (1) entourant cette structure, réalisée en une matériau thermoplastique ou thermodurcissable, cette gaine étant d'une part renforcée par des éléments d'armature (6), constitués de torons en acier, de mèches d'aramides, de polyamides, de polyesters, de fibres synthétiques, ou de fibres de verre ou de carbone, liées ou non par une résine thermodurcissable ou thermoplastique, noyés dans l'épaisseur de la gaine et s'étendant parallèlement à l'axe longitudinal du câble ou s'enroulant en hélice autour de cet axe, et présentant d'autre part des annelures externes (3), coaxiales et successives, modifiant périodiquement et régulièrement l'épaisseur de cette gaine sur toute sa longueur d'une annelure à la suivante, le profil de ces annelures, qui s'enroulent selon la direction de cet axe avec une configuration hélicoïdale, présentant selon un plan contenant l'axe la forme d'un trapèze, d'un triangle ou d'une fraction de sinusoïde, caractérisé en ce qu'il comporte un écrou (60) immobilisé en translation mais libre en rotation, dont le filetage interne (61) coopère avec les annelures (3) de la gaine (1).
